# EUROPEAN PATENT SPECIFICATION

(11) **EP 4 215 797 B1**
(45) Date of publication and mention of the grant of the patent: **14.05.2025**
(21) Application number: 22209915.2
(22) Date of filing: 28.11.2022
(51) Int. Cl.: F17C 5/00

(54) **HYDROGEN STORAGE DEVICE, AND VEHICLE**
WASSERSTOFFSPEICHERVORRICHTUNG UND FAHRZEUG
DISPOSITIF DE STOCKAGE D'HYDROGÈNE ET VÉHICULE

(30) Priority: 25.01.2022 JP 2022009256
(43) Date of publication of application: 26.07.2023
(73) Proprietor: TOYOTA JIDOSHA KABUSHIKI KAISHA, Aichi-Ken 471-8571 (JP)
(72) Inventor: YAMAMOTO, Shota, Toyota-shi, 471-8571 (JP); YAHASHI, Hiroki, Toyota-shi, 471-8571 (JP); OKAWACHI, Eiji, Toyota-shi, 471-8571 (JP)
(74) Representative: J A Kemp LLP

(56) References cited:
- JP-A- 2021 196 051
- US-A1- 2021 116 073
- US-A1- 2021 388 947

## Description

### 1. Field of the Invention

The disclosure relates to a hydrogen storage device mounted on a vehicle.

### 2. Description of Related Art

Japanese Unexamined Patent Application Publication No. 2020-078101 (JP 2020-078101 A) describes a configuration in which a vehicle that runs using hydrogen gas as a fuel includes a receptacle and a plurality of gas tanks. The receptacle is a member having a hydrogen filling port and into which a gas station (ST)-side nozzle is inserted.
Japanese Unexamined Patent Application Publication No. 2019-143672 (JP 2019-143672 A) describes a hydrogen filling device capable of filling a plurality of hydrogen tanks at the same time.
Japanese Unexamined Patent Application Publication No. 2005-155869 (JP 2005-155869 A) describes a method of filling a plurality of tanks with gas. In this method, gas fuel is filled into the tanks in order from the tank with higher heat radiation characteristics, and, after gas fuel is filled into the other tanks, gas fuel is filled into the tank with high heat radiation characteristics again.
Japanese Unexamined Patent Application Publication No. 2006-200563 (JP 2006-200563 A) describes a liquid hydrogen fuel supply system in which boil-off gas produced from liquid fuel is filled and then the volume of a filling device is configured to be changeable in accordance with the amount of boil-off gas. US 2021/0116073 A1 discloses a universal hydrogen filling performance evaluation system for back-to-back filling performance evaluation and capacity-specific filling performance evaluation.

### SUMMARY OF THE INVENTION

When hydrogen is filled into a vehicle with a large filling capacity, such as large commercial vehicles and buses equipped with fuel cells that use hydrogen as a fuel, it is desirable to efficiently fill hydrogen. With, for example, a configuration that fills hydrogen into a plurality of hydrogen tanks provided in a vehicle from a single receptacle, it particularly takes time to fill hydrogen. It is conceivable to provide a plurality of receptacles and connect each of the receptacles with the hydrogen tanks. However, there is a case where a nozzle is allowed to be connected to only one of the receptacles depending on an existing hydrogen filling station (hydrogen station). In this case, changing the receptacle to insert the nozzle is required, so it is complicated.

The disclosure makes it possible to efficiently fill hydrogen into a plurality of hydrogen tanks even in a vehicle equipped with the hydrogen tanks. The invention is defined by the independent claim. Further aspects and preferred embodiments are defined in the dependent claims. Any aspects, embodiments and examples of the present disclosure which do not fall under the scope of the appended claims do not form part of the invention and are merely provided for illustrative purposes.

A first aspect of the disclosure provides a hydrogen storage device provided in a vehicle that uses hydrogen as a fuel. The hydrogen storage device includes a plurality of receptacles, a plurality of hydrogen tanks, and a flow channel through which hydrogen flows from the receptacles to the hydrogen tanks. The flow channel has a confluence point configured such that the hydrogen merges into one on a downstream side of the plurality of receptacles. The flow channel branches from the confluence point into the plurality of hydrogen tanks.

In the flow channel, the length of a flow channel from every receptacle hydrogen storage device to the confluence point is shorter than the length of a flow channel from the confluence point to every hydrogen tank in the hydrogen storage device.

At least part of a flow channel from the receptacles to the confluence point may be a flow channel inside a distributor.

The plurality of hydrogen tanks may include hydrogen tanks with different capacities. The flow channel from the confluence point to the hydrogen tank with a first capacity may be shorter than the flow channel from the confluence point to the hydrogen tank with a second capacity less than the first capacity.

A second aspect of the disclosure provides a vehicle. The vehicle includes the above-described hydrogen storage device, and a fuel cell system configured to generate electricity from hydrogen supplied from the hydrogen tanks of the hydrogen storage device.

According to the aspects of the disclosure, even in a vehicle equipped with a plurality of hydrogen tanks, it is possible to efficiently fill hydrogen into the hydrogen tanks.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram that shows the outline of a vehicle;
FIG. 2A is a diagram that illustrates a hydrogen filling device;
FIG. 2B is another diagram that illustrates a hydrogen filling device;
FIG. 3 is a diagram that illustrates a hydrogen storage device according to an embodiment 1A;
FIG. 4 is a diagram that illustrates a hydrogen storage device according to an embodiment 1B;
FIG. 5 is a diagram that illustrates a hydrogen storage device according to an embodiment 2; and
FIG. 6 is a diagram that illustrates a hydrogen storage device according to an embodiment 3.

### DETAILED DESCRIPTION OF EMBODIMENTS

### 1. Vehicle

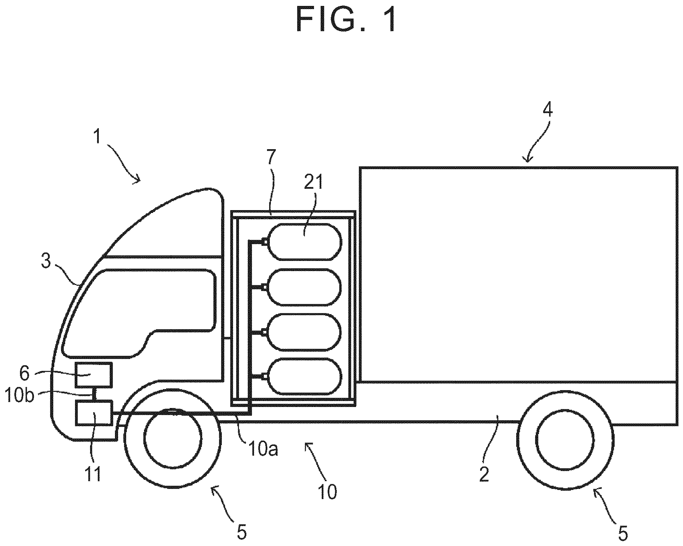

FIG. 1 schematically shows the outline of a vehicle 1 on which hydrogen tanks 21 are mounted. A hydrogen storage device 20 will be described later with reference to other drawings, so FIG. 1 shows only the hydrogen tanks 21 of the hydrogen storage device 20. The vehicle 1 according to the present embodiment is a large vehicle (truck). The vehicle 1 includes a chassis 2, a driving section 3 disposed at the front of the chassis 2, a load-carrying section 4 disposed at the rear of the chassis 2, wheel sections 5 provided under the chassis 2, an electric motor 6 that drives the vehicle 1, and a fuel cell unit 10. Here, a truck is illustrated as a large vehicle; however, the configuration is not limited thereto. The embodiment of the disclosure is also applicable to a bus and the like. The embodiment of the disclosure is not limited to large vehicles and is also applicable to ordinary passenger vehicles.

The fuel cell unit 10 includes a fuel cell 11, the hydrogen tanks 21, an air intake device (not shown), and a hydrogen tank storage case 7. With this configuration, hydrogen is supplied from the hydrogen tanks 21 stored in the hydrogen tank storage case 7 to the fuel cell 11 through a hydrogen supply pipe 10a, and air is supplied from the air intake device (not shown) to the fuel cell 11. The fuel cell 11 generates electricity by oxidizing hydrogen with supplied air (oxygen) and supplies electric power to the electric motor 6 through an electric line 10b to drive the electric motor 6, with the result that the vehicle 1 obtains a propulsive force. Driving the electric motor 6 with the fuel cell 11 using hydrogen as a fuel in the vehicle 1 is known. In addition, as will be described later, the hydrogen storage device 20 is disposed in the vehicle 1 according to the present embodiment. The hydrogen storage device 20 receives hydrogen supplied from a hydrogen filling device provided at a hydrogen station and stores hydrogen in the hydrogen tanks 21. Hydrogen is filled into the hydrogen tanks 21 by the hydrogen storage device 20.

### 2. Hydrogen Filling Device

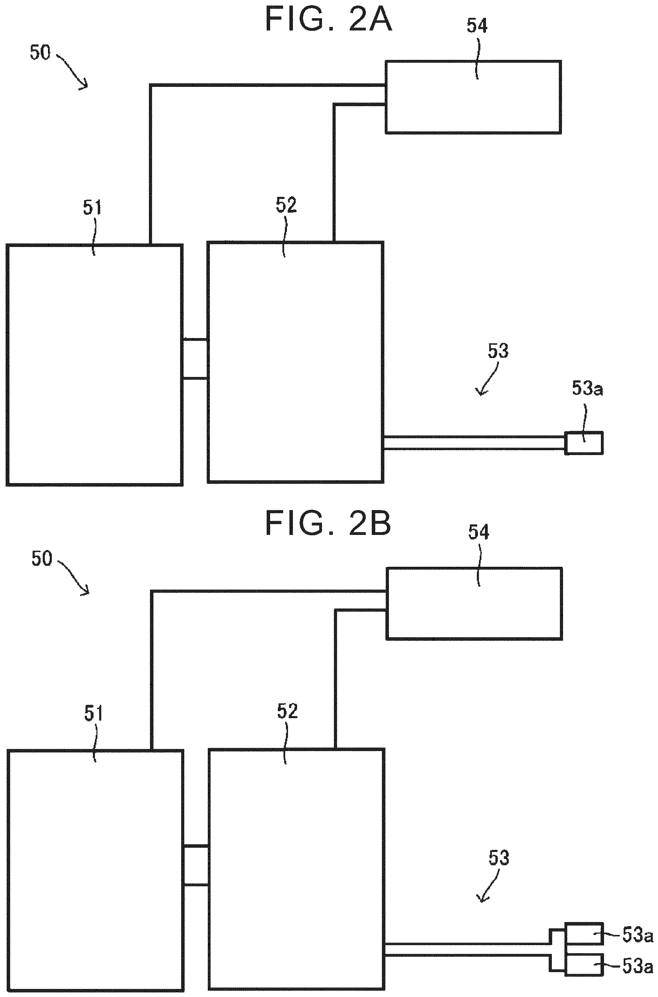

FIG. 2A and FIG. 2B are diagrams that illustrate the outline of the hydrogen filling device 50 that supplies hydrogen to the hydrogen storage device 20. The hydrogen filling device 50 includes an accumulator 51 in which hydrogen is encapsulated, a compressor 52 that compresses (pressurizes) hydrogen discharged from the accumulator 51 to a pipe, a hydrogen supply pipe 53 through which pressurized hydrogen is supplied from the compressor 52 to the hydrogen storage device 20 of the vehicle 1, and a controller 54 that controls supply of hydrogen. Hydrogen is filled when a nozzle 53a at the distal end of the hydrogen supply pipe 53 is connected to a receptacle 22 provided in the hydrogen storage device 20 of the vehicle 1. The hydrogen filling device 50 has a mode in which a single nozzle 53a is disposed as shown in FIG. 2A and a mode in which two or more (a plurality of) nozzles 53a are disposed as shown in FIG. 2B. The hydrogen storage device 20 described below is able to efficiently store hydrogen in any mode.

### 3. Hydrogen Storage Device

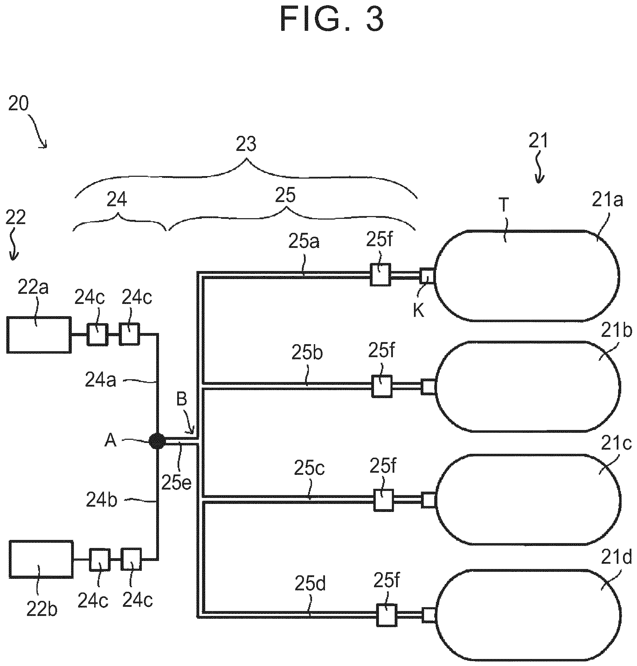

As described above, the vehicle 1 according to the present embodiment includes the hydrogen storage device 20 that is a device for storing hydrogen. FIG. 3 to FIG. 6 conceptually show the configurations of the hydrogen storage device 20 according to embodiments. Hereinafter, the embodiments will be described.

### 3.1. Embodiment 1

### 3.1.1. Embodiment 1A

FIG. 3 conceptually shows the configuration of the hydrogen storage device 20 according to an embodiment 1A. As is apparent from FIG. 3, in the present embodiment, the hydrogen storage device 20 includes the hydrogen tanks 21, the receptacles 22, and a flow channel 23.

### Hydrogen Tank

The hydrogen tanks 21 are containers that store hydrogen. Hydrogen is supplied from the hydrogen tanks 21 to the fuel cell 11. The specific structure of each of the hydrogen tanks 21 is not limited, and known ones usable as hydrogen tanks are applicable. Typically, a hydrogen tank includes a tank body T that is a portion storing hydrogen, and a pipe sleeve K that is the entrance of the tank body T for hydrogen and to which a pipe is connected.

In the present embodiment, the plurality of (for example, four) hydrogen tanks 21 is provided, and hydrogen is filled into each of the hydrogen tanks 21. Here, an example in which the four hydrogen tanks 21 are disposed will be described, and reference signs 21a, 21b, 21c, and 21d are used to distinguish the hydrogen tanks 21.

### Receptacle

When the receptacle 22 is connected to the nozzle 53a of the hydrogen filling device 50, the flow channel communicates between the hydrogen filling device 50 and the hydrogen storage device 20, and hydrogen flows from the hydrogen filling device 50 to the hydrogen tanks 21. The specific shape of each of the receptacles 22 is not limited, and the one with a known mode may be used.

In the present embodiment, a plurality of (for example, two) receptacles 22 is provided, and a downstream fitting is provided in each of the receptacles 22. Then, where necessary, the nozzle 53a is connected. For example, in the case of the hydrogen filling device 50 of FIG. 2A, the nozzle 53a just needs to be connected to one of the receptacles 22 (22a, 22b). In the case of the hydrogen filling device 50 of FIG. 2B, two nozzles 53a just need to be respectively connected to the receptacles 22 (22a, 22b). Here, an example in which two receptacles 22 are provided will be described, and reference signs 22a and 22b are used to distinguish the receptacles 22. Other than the case where one downstream fitting is provided for one receptacle as described above, there is a case where one downstream fitting is provided for a plurality of receptacles, and any case is applicable. In other words, a plurality of receptacles just needs to be provided.

### Flow Channel

The flow channel 23 is a flow channel that communicates the receptacles 22 with the hydrogen tanks 21 and is configured such that hydrogen flows. In the present embodiment, the flow channel 23 includes a receptacle-side flow channel 24 disposed on the side close to the receptacles 22 and a tank-side flow channel 25 disposed on the side close to the hydrogen tanks 21.

### Receptacle-Side Flow Channel

The receptacle-side flow channel 24 includes a flow channel 24a defined by a pipe of which one end is connected to the receptacle 22a and a flow channel 24b defined by a pipe of which one end is connected to the receptacle 22b. The other end of the flow channel 24a and the other end of the flow channel 24b are configured to merge at a confluence point A. In other words, hydrogen flowing in from the receptacle 22a and hydrogen flowing in from the receptacle 22b merge at the confluence point A. In the present embodiment, the confluence point A is made up of a pipe fitting, and the flow channel 24a, the flow channel 24b, and a pipe to a branch point B are connected by the pipe fitting. The flow channel 24a and the flow channel 24b are respectively connected to the receptacle 22a and the receptacle 22b. Therefore, the flow sectional area of each of the flow channels 24a, 24b is less than the flow sectional area of the tank-side flow channel 25 (the flow sectional area of each of the flow channels 25a, 25b, 25c, 25d defined by pipes) (flow resistance per unit length increases, and a pressure loss increases).

Two check valves 24c (valves that allow the flow in a direction from the receptacle side toward the confluence point and restricts the flow in the opposite direction) are preferably provided in each of the flow channel 24a and the flow channel 24b. Thus, backflow is doubly prevented, so safety is improved.

### Tank-Side Flow Channel

One end of the tank-side flow channel 25 is connected to the confluence point A. The tank-side flow channel 25 branches off at the branch point B halfway, and each of the other ends of the tank-side flow channel 25 is connected to an associated one of the hydrogen tanks 21. In other words, the tank-side flow channel 25 includes the flow channel 25e defined by a pipe from the confluence point A to the branch point B and the flow channel 25a defined by a pipe from the branch point B to the hydrogen tank 21a, the flow channel 25e and the flow channel 25b defined by a pipe to the hydrogen tank 21b, the flow channel 25e and the flow channel 25c defined by a pipe to the hydrogen tank 21c, and the flow channel 25e and the flow channel 25d defined by a pipe to the hydrogen tank 21d. In the present embodiment, the branch point B is made up of a pipe fitting, and the pipe of the flow channel 25e from the confluence point A and the pipes of the flow channels 25a, 25b, 25c, 25d are connected by the pipe fitting.
The flow sectional area of each of the flow channels 25a, 25b, 25c, 25d is greater than the flow sectional area of the receptacle-side flow channel 24 (the flow channel 24a and the flow channel 24b) (flow resistance per unit length is small, and a pressure loss is low).

A check valve 25f (a valve that allows the flow in a direction from the confluence point toward each hydrogen tank and restricts the flow in the opposite direction) is preferably provided in each of the flow channel 25a, the flow channel 25b, the flow channel 25c, and the flow channel 25d. Thus, backflow is prevented, so safety is improved. 3.1.1. Embodiment 1B

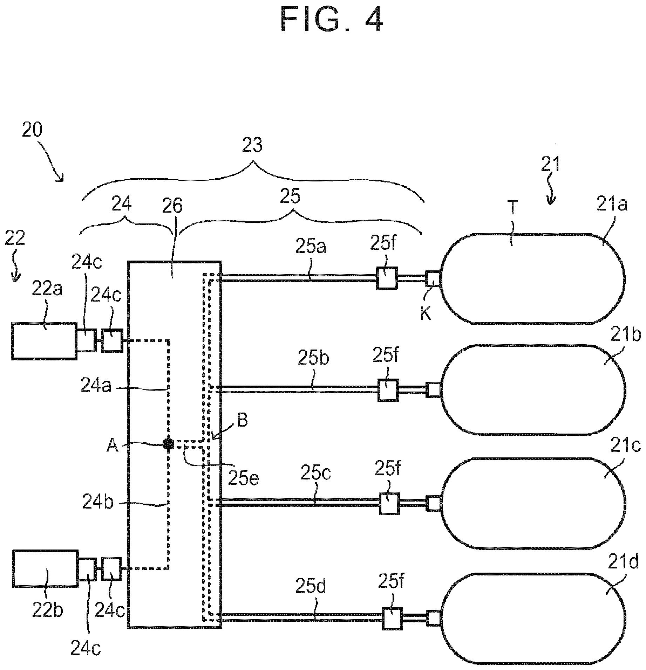

FIG. 4 conceptually shows the configuration of the hydrogen storage device 20 according to an embodiment 1B. As is apparent from FIG. 4, in the present embodiment, the hydrogen storage device 20 includes the hydrogen tanks 21, the receptacles 22, and the flow channel 23. Here, the hydrogen tanks 21 and the receptacles 22 are presumably similar to those of the embodiment 1A, so the description is omitted.

### Flow Channel

The flow channel 23 is a flow channel that communicates the receptacles 22 with the hydrogen tanks 21 and is configured such that hydrogen flows. In the present embodiment, the flow channel 23 includes the receptacle-side flow channel 24 disposed on the side close to the receptacles 22 and the tank-side flow channel 25 disposed on the side close to the hydrogen tanks 21.

### Receptacle-Side Flow Channel

In the present embodiment, in the receptacle-side flow channel 24, part of the flow channel 24a from the receptacle 22a to the confluence point A and the flow channel 24b from the receptacle 22b to the confluence point A is a flow channel inside a distributor 26. The distributor 26 is a block-shaped member in which the flow channel is defined. Therefore, in the flow channel 24a from the receptacle 22a to the confluence point A, a pipe is disposed at the receptacle 22a, the pipe is connected to the distributor 26, and the flow channel to the confluence point A is defined inside the distributor 26. Similarly, in the flow channel 24b from the receptacle 22b to the confluence point A, a pipe is disposed at the receptacle 22b, the pipe is connected to the distributor 26, and the flow channel to the confluence point A is defined inside the distributor 26. In other words, in the present embodiment, the distributor 26 provides a flow channel such that the confluence point A is included inside the distributor 26. The concept of the flow channel 24a, the flow channel 24b, and the confluence point A is similar to that of the embodiment 1A.

The two check valves 24c (the valves that allow the flow in a direction from the receptacle side toward the confluence point A and restricts the flow in the opposite direction) are preferably provided in each of the pipe in the flow channel 24a and the pipe in the flow channel 24b. Thus, backflow is doubly prevented, so safety is improved.

### Tank-Side Flow Channel

One end of the tank-side flow channel 25 is connected to the confluence point A. The tank-side flow channel 25 branches off at the branch point B halfway, and each of the other ends of the tank-side flow channel 25 is connected to an associated one of the hydrogen tanks 21. In other words, the tank-side flow channel 25 includes the flow channel 25e defined by a pipe from the confluence point A to the branch point B and the flow channel 25a defined by a pipe from the branch point B to the hydrogen tank 21a, the flow channel 25e and the flow channel 25b defined by a pipe to the hydrogen tank 21b, the flow channel 25e and the flow channel 25c defined by a pipe to the hydrogen tank 21c, and the flow channel 25e and the flow channel 25d defined by a pipe to the hydrogen tank 21d. In the present embodiment, the whole of the flow channel 25e including the branch point B and part of the other flow channels are made up of the flow channel inside the distributor 26. The flow sectional area of each of the flow channels 25a, 25b, 25c, 25d is greater than the flow sectional area of the receptacle-side flow channel 24 (the flow channel 24a and the flow channel 24b) (flow resistance per unit length is small, and a pressure loss is low).

The check valve 25f (the valve that allows the flow in a direction from the confluence point toward each hydrogen tank and restricts the flow in the opposite direction) is preferably provided in each of the flow channel 25a, the flow channel 25b, the flow channel 25c, and the flow channel 25d. Thus, backflow is prevented, so safety is improved. 3.1.3. Mode, Advantageous Effects, and Others of Flow Channel

In the present embodiment, in the flow channel 23, the flow channels (24a, 24b) respectively extend from the plurality of receptacles (22a, 22b) in the receptacle-side flow channel 24, the confluence point (confluence point A) at which these flow channels join into one is provided, the flow channel branches off from the tank-side flow channel 25 at the branch point B, and the flow channels are respectively connected to all the hydrogen tanks 21. At this time, at each of the confluence point A and the branch point B, the flow channels may be coupled by the pipe fitting as in the case of the embodiment 1A, or the flow channels may be coupled by the distributor in which the flow channel including both the confluence point A and the branch point B as in the case of the embodiment 1B is defined.

According to the present embodiment, it is possible to efficiently perform filling from the hydrogen filling device 50 to the hydrogen tanks 21. For example, in the case of the hydrogen filling device 50 of which the number of nozzles 53a is one (the number of hydrogen supply ports is one) as shown in FIG. 2A, when the nozzle 53a is connected to any one of the receptacle 22a and the receptacle 22b, it is possible to fill hydrogen into all the hydrogen tanks 21. Therefore, changing the receptacle to insert the nozzle is not required. On the other hand, for example, in the case of the hydrogen filling device 50 of which the number of nozzles 53a is two (the number of hydrogen supply ports is two) as shown in FIG. 2B, when the nozzles 53a are respectively connected to the receptacle 22a and the receptacle 22b, it is possible to fill hydrogen into all the hydrogen tanks 21. Therefore, changing the receptacle to insert the nozzle is not required also in this case.

The length of the flow channel between the receptacle 22 and the confluence point A (each of the length of the flow channel 24a and the length of the flow channel 24b) is configured to be shorter than the length of the flow channel between the confluence point A and the hydrogen tank 21 (the length of the flow channel 25e and flow channel 25a, the length of the flow channel 25e and flow channel 25b, the length of the flow channel 25e and flow channel 25c, and the length of the flow channel 25e and flow channel 25d). With this configuration, the receptacle-side flow channel 24 of which the flow sectional area is small is made short, so it is possible to suppress a pressure loss to a low level.

### 3.2. Embodiment 2

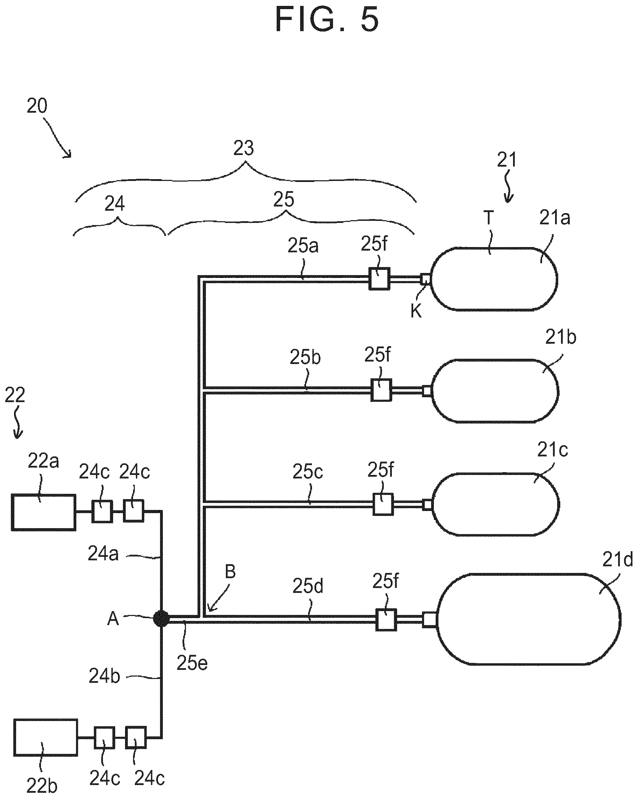

FIG. 5 conceptually shows the configuration of the hydrogen storage device 20 according to an embodiment 2. As is apparent from FIG. 5, in the present embodiment, the hydrogen storage device 20 includes the hydrogen tanks 21, the receptacles 22, and the flow channel 23. The receptacles 22 are presumably similar to those of the embodiment 1, so the description is omitted.

### Hydrogen Tank

The hydrogen tanks 21 are containers that store hydrogen. Hydrogen is supplied from the hydrogen tanks 21 to the fuel cell 11. The basic structure of each of the hydrogen tanks 21 is presumably similar to that of the embodiment 1. However, in the present embodiment, the hydrogen tanks 21 with different capacities are mixedly disposed. Specifically, in the present embodiment, the plurality of (for example, four) hydrogen tanks 21 is provided, and hydrogen is filled into each of the hydrogen tanks 21. Here, an example in which the four hydrogen tanks 21 are disposed will be described, and reference signs 21a, 21b, 21c, and 21d are used to distinguish the hydrogen tanks 21. Then, the hydrogen tank 21a, the hydrogen tank 21b, and the hydrogen tank 21c have the same second capacity, and the hydrogen tank 21d has a first capacity greater than the second capacity.

### Flow Channel

The flow channel 23 is a flow channel that communicates the receptacles 22 with the hydrogen tanks 21 and is configured such that hydrogen flows. In the present embodiment, the flow channel 23 includes the receptacle-side flow channel 24 disposed on the side close to the receptacles 22 and a tank-side flow channel 25 disposed on the side close to the hydrogen tanks 21.

### Receptacle-Side Flow Channel

The receptacle-side flow channel 24 includes the flow channel 24a defined by a pipe of which one end is connected to the receptacle 22a and the flow channel 24b defined by a pipe of which one end is connected to the receptacle 22b. The other end of the flow channel 24a and the other end of the flow channel 24b are configured to merge at the confluence point A. In other words, hydrogen flowing in from the receptacle 22a and hydrogen flowing in from the receptacle 22b merge at the confluence point A. The flow channel 24a and the flow channel 24b are respectively connected to the receptacle 22a and the receptacle 22b. Therefore, the flow sectional area of each of the flow channels 24a, 24b is less than the flow sectional area of the tank-side flow channel 25 (the flow sectional area of each of the flow channels 25a, 25b, 25c, 25d defined by the pipes) (flow resistance per unit length increases, and a pressure loss increases).

The two check valves 24c (the valves that allow the flow in a direction from the receptacle side toward the confluence point and restricts the flow in the opposite direction) are preferably provided in each of the flow channel 24a and the flow channel 24b. Thus, backflow is doubly prevented, so safety is improved.

### Tank-Side Flow Channel

One end of the tank-side flow channel 25 is connected to the confluence point A. The tank-side flow channel 25 branches off at the branch point B halfway, and each of the other ends of the tank-side flow channel 25 is connected to an associated one of the hydrogen tanks 21. In other words, the tank-side flow channel 25 includes the flow channel 25e defined by a pipe from the confluence point A to the branch point B and the flow channel 25a defined by a pipe from the branch point B to the hydrogen tank 21a, the flow channel 25e and the flow channel 25b defined by a pipe to the hydrogen tank 21b, the flow channel 25e and the flow channel 25c defined by a pipe to the hydrogen tank 21c, and the flow channel 25e and the flow channel 25d defined by a pipe to the hydrogen tank 21d. The flow sectional area of each of the flow channels 25a, 25b, 25c, 25d is greater than the flow sectional area of the receptacle-side flow channel 24 (the flow channel 24a and the flow channel 24b) (flow resistance per unit length is small, and a pressure loss is low).

In the present embodiment, as is apparent from FIG. 5, the flow channel 25d to the hydrogen tank 21d with a relatively large capacity is configured to be shorter than each of the flow channels 25a, 25b, 25c to the other hydrogen tanks 21a, 21b, 21c. When the tank capacities are different, the flow rate of the flow channel connected to the hydrogen tank with a relatively large capacity increases, and a pressure loss tends to be high. Therefore, it is possible to suppress a pressure loss to a low level by reducing the length. A specific extent of the length of the flow channel is not limited, and the length may be changed to perform proportional distribution in accordance with a difference in tank capacity. When the tank capacities are not two types but three types or more, the length of the flow channel may be configured to be reduced as the tank capacity increases in proportional distribution according to the tank capacities.

The check valve 25f (the value that allows the flow in a direction from the confluence point toward each hydrogen tank and restricts the flow in the opposite direction) is preferably provided in each of the flow channel 25a, the flow channel 25b, the flow channel 25c, and the flow channel 25d. Thus, backflow is prevented, so safety is improved. Mode, Advantageous Effects, and Others of Flow Channel

The mode of the flow channel in the present embodiment may also be presumably similar to the embodiment 1, and similar advantageous effects are obtained. In the present embodiment, by changing the length of each of the flow channels (25a, 25b, 25c, 25d) of the tank-side flow channel in accordance with the tank capacity, it is possible to suppress an increase in pressure loss even in the case where a plurality of hydrogen tanks with different tank capacities is disposed. Therefore, efficient hydrogen storage is possible. 3.3. Embodiment 3

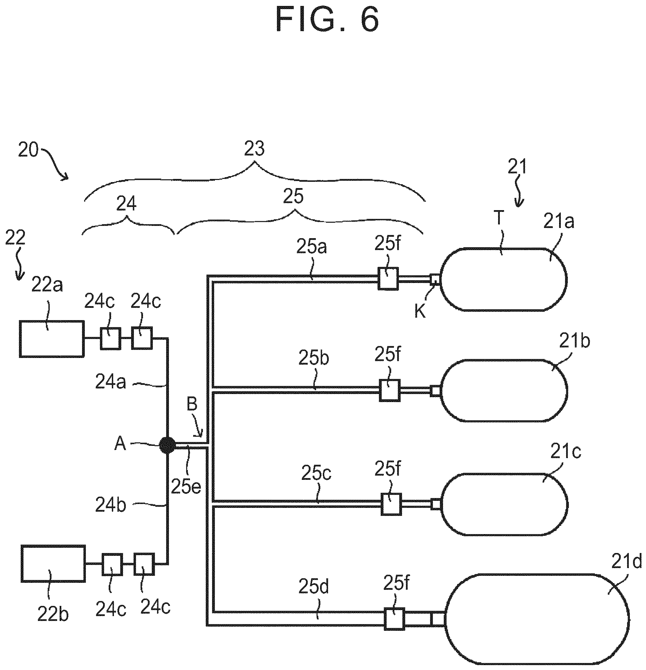

FIG. 6 conceptually shows the configuration of the hydrogen storage device 20 according to an embodiment 3. As is apparent from FIG. 6, in the present embodiment, the hydrogen storage device 20 includes the hydrogen tanks 21, the receptacles 22, and the flow channel 23. The receptacles 22 are presumably similar to those of the embodiment 1, so the description is omitted.

### Hydrogen Tank

The hydrogen tanks 21 are containers that store hydrogen. Hydrogen is supplied from the hydrogen tanks 21 to the fuel cell 11. The basic structure of each of the hydrogen tanks 21 is presumably similar to that of the embodiment 1. However, in the present embodiment, the hydrogen tanks 21 with different capacities are mixedly disposed. Specifically, in the present embodiment, the plurality of (for example, four) hydrogen tanks 21 is provided, and hydrogen is filled into each of the hydrogen tanks 21. Here, an example in which the four hydrogen tanks 21 are disposed will be described, and reference signs 21a, 21b, 21c, and 21d are used to distinguish the hydrogen tanks 21. Then, the hydrogen tank 21a, the hydrogen tank 21b, and the hydrogen tank 21c have the same second capacity, and the hydrogen tank 21d has a first capacity greater than the second capacity.

### Flow Channel

The flow channel 23 is a flow channel that communicates the receptacles 22 with the hydrogen tanks 21 and is configured such that hydrogen flows. In the present embodiment, the flow channel 23 includes the receptacle-side flow channel 24 disposed on the side close to the receptacles 22 and a tank-side flow channel 25 disposed on the side close to the hydrogen tanks 21.

### Receptacle-Side Flow Channel

The receptacle-side flow channel 24 includes the flow channel 24a defined by a pipe of which one end is connected to the receptacle 22a and the flow channel 24b defined by a pipe of which one end is connected to the receptacle 22b. The other end of the flow channel 24a and the other end of the flow channel 24b are configured to merge at the confluence point A. In other words, hydrogen flowing in from the receptacle 22a and hydrogen flowing in from the receptacle 22b merge at the confluence point A. The flow channel 24a and the flow channel 24b are respectively connected to the receptacle 22a and the receptacle 22b. Therefore, the flow sectional area of each of the flow channels 24a, 24b is less than the flow sectional area of the tank-side flow channel 25 (the flow sectional area of each of the flow channels 25a, 25b, 25c, 25d defined by pipes) (flow resistance per unit length increases, and a pressure loss increases).

The two check valves 24c (the valves that allow the flow in a direction from the receptacle side toward the confluence point and restricts the flow in the opposite direction) are preferably provided in each of the flow channel 24a and the flow channel 24b. Thus, backflow is doubly prevented, so safety is improved.

### Tank-Side Flow Channel

One end of the tank-side flow channel 25 is connected to the confluence point A. The tank-side flow channel 25 branches off at the branch point B halfway, and each of the other ends of the tank-side flow channel 25 is connected to an associated one of the hydrogen tanks 21. In other words, the tank-side flow channel 25 includes the flow channel 25e defined by a pipe from the confluence point A to the branch point B and the flow channel 25a defined by a pipe from the branch point B to the hydrogen tank 21a, the flow channel 25e and the flow channel 25b defined by a pipe to the hydrogen tank 21b, the flow channel 25e and the flow channel 25c defined by a pipe to the hydrogen tank 21c, and the flow channel 25e and the flow channel 25d defined by a pipe to the hydrogen tank 21d. The flow sectional area of each of the flow channels 25a, 25b, 25c, 25d is greater than the flow sectional area of the receptacle-side flow channel 24 (the flow channel 24a and the flow channel 24b) (flow resistance per unit length is small, and a pressure loss is low).

In the present embodiment, as is apparent from FIG. 6, the flow sectional area of the flow channel 25d to the hydrogen tank 21d with a larger capacity than the other is configured to be greater than the flow sectional area of each of the flow channels 25a, 25b, 25c to the other hydrogen tanks 21a, 21b, 21c. When the tank capacities are different, the flow rate of the flow channel connected to the hydrogen tank with a relatively large capacity increases, and a pressure loss tends to be high, so, with this configuration, it is possible to suppress a pressure loss to a low level. A specific extent of the flow sectional area is not limited, and the flow sectional area may be changed to perform proportional distribution in accordance with a difference in tank capacity. When the tank capacities are not two types and the tank capacities are three or more types, the flow sectional area may be configured to be increased as the tank capacity increases in proportional distribution according to the tank capacities.

The check valve 25f (the value that allows the flow in a direction from the confluence point toward each hydrogen tank and restricts the flow in the opposite direction) is preferably provided in each of the flow channel 25a, the flow channel 25b, the flow channel 25c, and the flow channel 25d. Thus, backflow is prevented, so safety is improved. Mode, Advantageous Effects, and Others of Flow Channel

The mode of the flow channel in the present embodiment may also be presumably similar to the embodiment 1, and similar advantageous effects are obtained. In the present embodiment, by changing the flow sectional area of each of the flow channels (25a, 25b, 25c, 25d) of the tank-side flow channel in accordance with the tank capacity, it is possible to suppress an increase in pressure loss even in the case where a plurality of hydrogen tanks with different tank capacities is disposed. Therefore, efficient hydrogen filling is possible.

### 4. Others

The hydrogen storage devices according to the embodiment 1 to the embodiment 3 are not limited to application of any one of the embodiments. At least two of the hydrogen storage devices according to the embodiment 1 to the embodiment 3 may be combined. Thus, it is possible to increase the design flexibility of receptacle arrangement, pipe arrangement, and hydrogen tank arrangement.

The flow channel of the hydrogen storage device is a flow channel used at the time of filling hydrogen into each of the hydrogen tanks; however, a flow channel for flowing out hydrogen to a fuel cell system is also connected to each of the hydrogen tanks. Therefore, part of the flow channel of the hydrogen storage device may also serve as a flow channel for the fuel cell system. Switching of the flow channel at that time is able to be performed by using a selector valve made up of an electromagnetic valve.

## Claims

1. A hydrogen storage device (20) provided in a vehicle (1) that uses hydrogen as a fuel, the hydrogen storage device (20) comprising:
a plurality of receptacles (22a, 22b);
a plurality of hydrogen tanks (21a, 21b, 21c, 21d); and
a flow channel (23) through which hydrogen flows from the receptacles (22a, 22b) to the hydrogen tanks (21a, 21b, 21c, 21d), wherein:
the flow channel (23) has a confluence point (A) configured such that the hydrogen merges into one on a downstream side of the receptacles (22a, 22b);
the flow channel (23) is configured to branch from the confluence point (A) into the plurality of hydrogen tanks (21a, 21b, 21c, 21d);
**characterised in that** in the flow channel (23), a length of a flow channel (24) from every receptacle (22a, 22b) in the hydrogen storage device (20) to the confluence point (A) is shorter than a length of a flow channel (25) from the confluence point (A) to every hydrogen tank (21a, 21b, 21c, 21d) in the hydrogen storage device (20).

2. The hydrogen storage device (20) according to claim 1, wherein at least part of a flow channel (24) from the receptacles (22a, 22b) to the confluence point (A) is a flow channel inside a distributor (26).

3. The hydrogen storage device (20) according to claim 1 or 2, wherein:
the plurality of hydrogen tanks (21a, 21b, 21c, 21d) includes hydrogen tanks with different capacities; and
a flow channel (25) from the confluence point (A) to the hydrogen tank (21d) with a first capacity is shorter than a flow channel (25) from the confluence point (A) to the hydrogen tank (21a, 21b, 21c) with a second capacity less than the first capacity.

4. A vehicle (1) comprising:
the hydrogen storage device (20) according to any one of claims 1 to 3; and
a fuel cell system configured to generate electricity from hydrogen supplied from the hydrogen tanks (21a, 21b, 21c, 21d) of the hydrogen storage device (20).

## Patentansprüche

1. Wasserstoffspeichervorrichtung (20), die in einem Fahrzeug (1) bereitgestellt ist, das Wasserstoff als einen Brennstoff verwendet, wobei die Wasserstoffspeichervorrichtung (20) umfasst:
eine Mehrzahl von Behältern (22a, 22b);
eine Mehrzahl von Wasserstofftanks (21a, 21b, 21c, 21d); und
einen Strömungskanal (23), durch den Wasserstoff von den Behältern (22a, 22b) zu den Wasserstofftanks (21a, 21b, 21c, 21d) strömt, wobei:
der Strömungskanal (23) einen Zusammenflusspunkt (A) aufweist, der derart konfiguriert ist, dass der Wasserstoff auf einer stromabwärtigen Seite der Behälter (22a, 22b) zusammenfließt;
der Strömungskanal (23) dazu konfiguriert ist, sich von dem Zusammenflusspunkt (A) in die Mehrzahl von Wasserstofftanks (21a, 21b, 21c, 21d) zu verzweigen;
**dadurch gekennzeichnet, dass** in dem Strömungskanal (23) eine Länge eines Strömungskanals (24) von jedem Behälter (22a, 22b) in der Wasserstoffspeichervorrichtung (20) bis zu dem Zusammenflusspunkt (A) kürzer ist als eine Länge eines Strömungskanals (25) von dem Zusammenflusspunkt (A) zu jedem Wasserstofftank (21a, 21b, 21c, 21d) in der Wasserstoffspeichervorrichtung (20).

2. Wasserstoffspeichervorrichtung (20) nach Anspruch 1, wobei wenigstens ein Teil eines Strömungskanals (24) von den Behältern (22a, 22b) zu dem Zusammenflusspunkt (A) ein Strömungskanal innerhalb eines Verteilers (26) ist.

3. Wasserstoffspeichervorrichtung (20) nach Anspruch 1 oder 2, wobei:
die Mehrzahl von Wasserstofftanks (21a, 21b, 21c, 21d) Wasserstofftanks mit unterschiedlichen Kapazitäten beinhaltet; und
ein Strömungskanal (25) von dem Zusammenflusspunkt (A) zu dem Wasserstofftank (21d) mit einer ersten Kapazität kürzer ist als ein Strömungskanal (25) von dem Zusammenflusspunkt (A) zu dem Wasserstofftank (21a, 21b, 21c) mit einer zweiten Kapazität, die geringer ist als die erste Kapazität.

4. Fahrzeug (1), umfassend:
die Wasserstoffspeichervorrichtung (20) nach einem der Ansprüche 1 bis 3; und
ein Brennstoffzellsystem, das dazu konfiguriert ist, Elektrizität aus dem Wasserstoff zu erzeugen, der von den Wasserstofftanks (21a, 21b, 21c, 21d) der Wasserstoffspeichervorrichtung (20) zugeführt wird.

## Revendications

1. Dispositif de stockage d'hydrogène (20) prévu dans un véhicule (1) qui utilise l'hydrogène comme carburant, le dispositif de stockage d'hydrogène (20) comprenant :
une pluralité de réceptacles (22a, 22b) ;
une pluralité de réservoirs d'hydrogène (21a, 21b, 21c, 21d) ; et
un canal d'écoulement (23) par lequel l'hydrogène s'écoule à partir des réceptacles (22a, 22b) vers les réservoirs d'hydrogène (21a, 21b, 21c, 21d), sachant que :
le canal d'écoulement (23) a un point de confluence (A) conçu de façon que l'hydrogène se regroupe sur un côté aval des réceptacles (22a, 22b), et
le canal d'écoulement (23) est conçu pour se ramifier à partir du point de confluence (A) vers la pluralité de réservoirs d'hydrogène (21a, 21b, 21c, 21d) ;
**caractérisé en ce que**, dans le canal d'écoulement (23), une longueur de canal d'écoulement (24) partant de chaque réceptacle (22a, 22b) du dispositif de stockage d'hydrogène (20) et allant jusqu'au point de confluence (A) est plus courte qu'une longueur de canal d'écoulement (25) partant du point de confluence (A) et allant jusqu'à chaque réservoir d'hydrogène (21a, 21b, 21c, 21d) du dispositif de stockage d'hydrogène (20).

2. Dispositif de stockage d'hydrogène (20) selon la revendication 1, dans lequel au moins une partie d'un canal d'écoulement (24) partant des réceptacles (22a, 22b) et allant jusqu'au point de confluence (A) est un canal d'écoulement présent au sein d'un distributeur (26).

3. Dispositif de stockage d'hydrogène (20) selon la revendication 1 ou 2, dans lequel :
la pluralité de réservoirs d'hydrogène (21a, 21b, 21c, 21d) comprend des réservoirs d'hydrogène de différentes capacités, et
un canal d'écoulement (25) partant du point de confluence (A) et allant jusqu'au réservoir d'hydrogène (21d) et doté d'une première capacité est plus court qu'un canal d'écoulement (25) partant du point de confluence (A) et allant jusqu'au réservoir d'hydrogène (21a, 21b, 21c) et doté d'une deuxième capacité inférieure à la première capacité.

4. Véhicule (1) comprenant :
le dispositif de stockage d'hydrogène (20) selon l'une quelconque des revendications 1 à 3, et
un système de pile à combustible conçu pour générer de l'électricité à partir de l'hydrogène fourni par les réservoirs d'hydrogène (21a, 21b, 21c, 21d) du dispositif de stockage d'hydrogène (20).
